# EUROPÄISCHE PATENTSCHRIFT

(11) **EP 1 125 664 B1**
(45) Veröffentlichungstag und Bekanntmachung des Hinweises auf die Patenterteilung: **18.08.2010**
(21) Anmeldenummer: 01810117.0
(22) Anmeldetag: 06.02.2001
(51) Int. Cl.: B23B 51/02

(54) **Bohrwerkzeug für Gestein**
Drilling tool for stone
Outil de forage pour pierre

(30) Priorität: 16.02.2000 DE 10006936
(43) Veröffentlichungstag der Anmeldung: 22.08.2001
(73) Patentinhaber: HILTI Aktiengesellschaft, 9494 Schaan (LI)
(72) Erfinder: Hauptmann, Udo, 86899 Landsberg/Lech (DE); Hofmann, Karl-Heinz, 86947 Weil (DE); Starkmann, Josef, 86857 Hurlach (DE); Pröls, Tim, 80997 München (DE)
(74) Vertreter: Wildi, Roland

(56) Entgegenhaltungen:
- EP-A- 0 657 617
- EP-A- 0 865 854
- EP-A- 0 884 448
- WO-A-97/06338

## Beschreibung

Die Erfindung bezeichnet ein Bohrwerkzeug, welches in ein antreibendes Handwerkzeug eingespannt durch drehende und schlagend schwingende Bewegungen einen abrasiven Materialabtrag erzeugt, für Gestein, vorzugsweise Beton.

Derartige Bohrwerkzeuge weisen aufgrund der zum abrasiven Materialabtrag von Gestein bei geringem Verschleiss benötigten hohen Härte im Werkzeugkopf eingesetzte Teile aus Hartmetall auf, welche mit dem restlichen Bohrwerkzeug fest verbunden sind. Üblicherweise werden Hartmetallplatten in achsparallele nutartige Verzapfungen im Werkzeugkopf eingelötet, bspw. nach der DE2008825, wobei sich die radialen Enden der Schneiden in diesen zugeordneten Wendelgängen des Wendels zum Abtransport des Materials fortsetzen. Zur Verbesserung der Haftung weisen nach der Druckschrift EP0947662A1 die Hartmetallplatten zusätzliche prismatische Fortsätze auf, welche die in entsprechende Ausnehmung in dem restlichen Bohrwerkzeug eingreifen.

Nachteilig bei derartigen Befestigungen in achsparalleler nutartiger Verzapfung ist das leichte Ausbrechen der Hartmetallplatten bei möglichen radialen Verhakungen der Hartmetallplatte, insbesondere beim Auftreffen des Bohrwerkzeugs auf Armierungseisen, welche vermittelt über die durch eine geringe Plattendicke begrenzte Biegesteifigkeit der Hartmetallplatte zu einer lokalen Zugbeanspruchung bezüglich der diese befestigenden axial verlaufenden Grenzflächen der Verzapfungen führt und somit einen Bruch begünstigt. Zudem werden derartige axial verlaufende Grenzflächen durch die axialen Schläge auf das Bohrwerkzeug über Scherbeanspruchung ermüdet. Des weiteren nachteilig ist der durch die seitlich an den Hartmetallplatten anliegenden stützenden Verzapfungen bedingte geometrisch eingeengte Freiraum zur Ausräumung des abgetragenen Materials.

Nach der WO9706338 weist ein derartiges Bohrwerkzeug eine schmale, direkt im zweigängigen Wendelgang angelötete Hartmetallplatte auf, welche anderenseits der Schneide eine freiliegende Seitenfläche aufweist.

Aus der Druckschrift DE4339245 ist die Ausführung des gesamten Werkzeugkopfes aus Hartmetall und deren fester Verbindung mit dem restlichen Bohrwerkzeug ausschliesslich über die senkrecht zur Drehachse liegende Stirnfläche bekannt. Vollhartmetallköpfe in kompakter, d.h. im wesentlichen in konvexer vieleckiger Form mit ähnlichen Seitenlängen, besitzen eine hohe innere Steifigkeit und benötigen zur Befestigung keine axial verlaufenden Grenzflächen, die bei möglichen Verhakungen einen Bruch begünstigen. Vielmehr unterliegt die ausschliesslich in radialer Richtung verlaufende Grenzfläche im wesentlichen einer Druckschwellbeanspruchung. Die verbleibende überlagerte Torsionsbeanspruchung kann jedoch zu einer Torsionsermüdung am radialen Rand der Grenzschicht führen. Zur Verhinderung einer, zu derartiger hoher Torsionsbeanspruchung führenden, Verhakung im Armierungseisen sind des weiteren zusätzlich zwischen den Hauptschneiden ausschliesslich am radialen Rand angeordnete axial zurückversetzte Nebenschneiden vorhanden, welche durch ihren Eindringwiderstand und der Massenträgheit einem zu tiefen Eindringen der Hauptschneiden in das Armierungseisen entgegenwirken. Bei grösseren Durchmessern des Bohrwerkzeuges ist bei einer derartigen Ausführung das benötigte Volumen des Vollhartmetallkopfes in kompakter Form bezüglich fertigungstechnischer und kostenseitiger Aspekte nachteilig.

Nach der Druckschrift EP884448 ist ein ausschliesslich auf der Stirnfläche befestigter Vollhartmetallkopf mit "X-förmiger Anordnung der vier Schneiden vorbekannt, wobei sich die Haupt- und die als Zusatzschneiden ausgeführten Nebenschneiden jeweils diametral zur Drehachse erstrecken und nicht rechtwinklig zueinander angeordnet sind. Der Vollhartmetallkopf besitzt eine zweizählig rotationssymmetrische, im wesentlichen kreuzweise axial spiegelsymmetrische, prismatische Form. Die Grundfläche ist mit jeweils einer tiefen, sich in das innere radiale Drittel erstreckenden, konkaven, stumpfwinkeligen Einkerbung parallel zu den Schneiden über die längere Seite der Grundfläche versehen. Diese grosse Ausnehmung dient ausschliesslich als Freiraum für die Ausräumung des abrasiv abgetragenen Materials. In Drehrichtung läuft die Zusatzschneide der Hauptschneide nach, d.h. bildet mit dieser einen spitzen Winkel aus. Somit ist die grosse Ausnehmung vor der Hauptschneide angeordnet. Eine kleine ebenfalls konkave Ausnehmung der jeweils kürzeren Seite der Grundfläche beschränkt sich auf den radialen Randbereich und dient der geringeren Ausräumung des abrasiv abgetragenen Materials vor der Nebenschneide. Nachteilig dieses ausschliesslich auf der Stirnfläche befestigten Vollhartmetallkopfes ist die bei grösseren Durchmessern des Bohrwerkzeuges auftretende, bei Verhakungen nicht mehr vernachlässigbare, Torsionsbeanspruchung der zur Befestigung dienenden Stirnfläche. Zudem wird durch den in Drehrichtung stumpfen Winkel zwischen der Nebenschneide und der Hauptschneide ein relativ weiter, von der Massenträgheit zu überbrückender, Drehwinkel zur durch die Nebenschneide bewirkten Verminderung einer Verhakung benötigt, welcher gerade mit bei geringerer Drehzahl betriebenen Bohrwerkzeugen mit grösseren Durchmessern kaum realisierbar ist.

Aus der Druckschrift DE19707115 ist ein Bohrwerkzeug mit mehr als zwei, jeweils ganzzählig rotationssymmetrisch angeordneten, radialen Schneiden und einem nicht aus einzelnen Hartmetallplatten bestehenden, sondern einstückig ausgeführten, prismatischen Vollhartmetallkopf vorbekannt, welcher in entsprechende Nuten mit jeweils axial verlaufenden Flächen im restlichen Bohrwerkzeug eingesetzt mit diesen und der Stirnfläche fest verbunden ist. Durch die Kombination der Befestigung eines biegesteifen Vollhartmetallkopfes auf der Stirnfläche einerseits sowie dessen zusätzlicher Befestigung in jeweils achsparalleler nutartiger Verzapfung im radial äusseren Bereich andererseits ist auch bei Bohrwerkzeugen mit grösseren Durchmessern eine bruchsichere Befestigung der Schneiden auch gegenüber Armierungstreffern gewährleistet. Nachteilig bei einer derartigen Lösung ist die für die zusätzliche achsparallele nutartige Verzapfung beidseitig je Schneide benötigte Querschnittsfläche, welche einer Ausnehmung nicht mehr zur Verfügung steht. Bei hoher Bohrleistung ergeben sich dadurch Probleme bei der Ausräumung des abrasiv abgetragenen Materials.

Es ist die Aufgabe der Erfindung unter Vermeidung obiger Nachteile ein Bohrwerkzeug für Gestein aufzuzeigen, welches auch bei grösseren Durchmessern eine gegenüber Armierungstreffern bruchsichere Befestigung der Schneiden aus Hartmetall gewährleistet und zudem eine ausreichend grosse Ausnehmung für die Ausräumung des abrasiv abgetragenen Materials bei hohen Bohrleistungen zur Verfügung stellt.

Diese Aufgabe wird durch die in Anspruch 1 aufgezeigten Merkmale gelöst. Vorteilhafte Weiterbildungen ergeben sich aus den Unteransprüchen.

Wesentlich für die Lösung ist die zur Befestigung des Vollhartmetallkopfes an der senkrecht zur Drehachse liegenden Stirnseite zusätzliche Befestigung an nur einem Teil der radial im äusseren Bereich längs der Drehachse liegenden, vorteilhaft achsparallelen, Seitenflächen der Schneiden des Vollhartmetallkopfes, wobei diese befestigten Seitenflächen zumindest bezüglich einiger Schneiden in Drehrichtung unterstützend wirken, d.h. auf Druck beansprucht werden. Dadurch wird eine bruchsichere Befestigung des Vollhartmetallkopfes auch bei der höheren Torsionsbeanspruchung von Bohrwerkzeugen grösseren Durchmessers erzielt.

Vorteilhaft ist bezüglich des jeweils anderen Teils der Seitenflächen der Schneiden des Vollhartmetallkopfes ein nicht der Befestigung dienender freier Übergang zur Ausnehmung, welche der Ausräumung des abrasiv abgetragenen Materials dient. Weiter vorteilhaft ist diese frei liegende Seitenfläche bezüglich der Schneide in Drehrichtung orientiert, wodurch diese Ausnehmung vor der Hauptschneide liegt. Damit wird eine direkte Ausräumung, d.h. ohne wesentliche Mitnahme des Materials in Drehrichtung, des an der Schneide abrasiv abgetragenen Materials erzielt.

Bei Bohrwerkzeugen mit einer geradzahligen Anzahl von Schneiden, welche vorzugsweise Haupt- und Nebenschneiden ausbilden, die ganzzählig rotationssymmetrisch angeordnet sind, erfolgt eine Unterstützung in Drehrichtung vorteilhaft bezüglich der Hauptschneide. Deren in Drehrichtung liegende Seitenfläche ist somit frei. Die der Hauptschneide zugeordnete, in Drehrichtung zuvor liegende, Ausnehmung wird vorteilhaft von einer entgegen orientierten, ebenfalls einen freier Übergang bildenden, Seitenfläche begrenzt und realisiert somit eine grösstmögliche Ausnehmung vor der Hauptschneide. Die benachbarte, durch die Befestigung der beiden winkelig aneinanderstossenden achsparallelen Seitenflächen kleinere, Ausnehmung vor den Nebenschneiden ist für deren geringeren Materialabtrag hinreichend. Somit wird auch bei hoher Bohrleistung die Ausräumung des abrasiv abgetragenen Materials gewährleistet.

Bei Bohrwerkzeugen mit vier Schneiden, von denen vorzugsweise zweizählig rotationssymmetrisch angeordnet je zwei Haupt- und Nebenschneiden ausgebildet sind, werden vorteilhaft zwei diametral gegenüberliegende, jeweils von einer Haupt- und einer Nebenschneide ausgebildete, winkelig aneinandergrenzende achsparallele Seitenflächen zur Befestigung verwendet, wobei die restlichen, jeweils bezüglich der zugeordneten Schneide gegenüberliegenden, ebenfalls winkelig aneinandergrenzenden achsparallelen Seitenflächen frei liegen. Bei Vollhartmetallköpfen mit vier im wesentlichen radial verlaufenden Schneiden werden somit je zwei diametral gegenüberliegende Innenwinkelflächen zur Befestigung benutzt, die restlichen, ebenfalls diametral gegenüberliegenden Innenwinkelflächen liegen frei und bilden die grosse Ausnehmung zur Ausräumung des abrasiv abgetragenen Materials aus.

Bei Bohrwerkzeugen mit Haupt- und Nebenschneiden ist bezüglich der Begrenzung der Torsionsbeanspruchung bei einem Armierungstreffer die Ausbildung einer bezüglich der Hauptschneide vorlaufenden Nebenschneide vorteilhaft. Durch die Verringerung des durch die Massenträgheit zu überbrückenden Drehwinkels und damit der Eindringzeit bei gegebener Drehzahl wird das Eindringen der Hauptschneide in die Armierung und damit die Torsionsbeanspruchung der Schneiden des Vollhartmetallkopfes begrenzt. Die durch die vorlaufende Nebenschneide relative Verkleinerung der Ausnehmung vor der Hauptschneide wird durch deren relative Vergrösserung bei freiliegenden Seitenflächen kompensiert. Somit kann bei gleicher Ausräumung ein geringeres Eindringen der Hauptschneide bei Armierungstreffern erzielt werden.

Eine vorteilhafte lotrechte, nicht radiale, Anordnung der freien Seitenfläche der nachlaufenden Nebenschneide zu der sich radial erstreckenden Hauptschneide erhöht die innere Steifigkeit des Vollhartmetallkopfes und verbessert die Ausräumung durch geringere angrenzende reibende Seitenflächen.

Vorteilhaft setzt sich die für den Vollhartmetallkopf und für die Verzapfung zur Befestigung der Seitenflächen benötigte Querschnittsfläche des Bohrkopfes im restlichen Bohrwerkzeug fort und geht bezüglich der radial äusseren Bereiche in zugeordnete Wendelgänge zum Abtransport des Materials über, wobei weiter vorteilhaft die Hauptschneiden in die Hauptwendelgänge zur Überleitung von Kräften sowie zum Abtransport des Materials übergehen und die Nebenschneiden in sich stetig radial verkürzende, nicht bis an die durch die Rotation der Hauptwendelgänge ausgebildete Hüllkurve heranreichende, Nebenwendelgänge zur Überleitung von Kräften übergehen, welche sich optional über den gesamten Wendel fortsetzen. Dadurch werden die im Bohrkopf separaten Ausnehmungen der Haupt- und Nebenschneide zur Ausräumung in einem gemeinsamen grossen Wendelgang mit geringen reibenden Flächen zusammengeführt.

Die Erfindung wird nachfolgend in einer vorteilhaften Ausführungsform beschrieben. Dazu zeigen:
Fig. 1 eine Seitenansicht des vorderen Teils eines Bohrwerkzeuges für Gestein
Fig. 2 eine um 90° verdrehte Seitenansicht
Fig. 3 eine Vorderansicht
Fig. 4 den Schnitt IV - IV aus Fig. 2

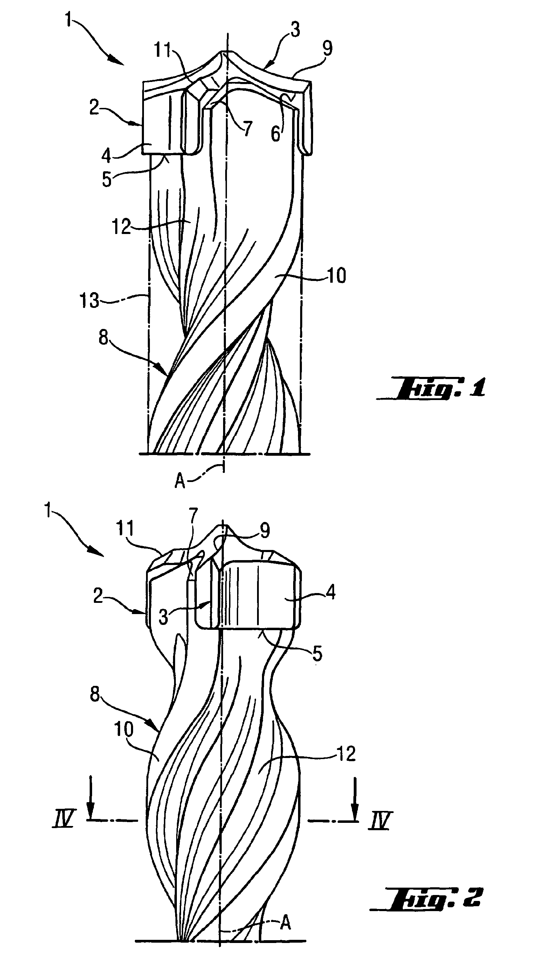

Nach Fig. 1 bzw. Fig. 2 weist ein Bohrwerkzeug 1 für Gestein einen Bohrkopf 2 mit Schneiden 3 aus Hartmetall auf, welcher als einzelner Vollhartmetallkopf 4 ausgebildet, bezüglich seiner Stirnfläche 5 und einigen Seitenflächen 6 der Schneiden 3 längs der Drehachse A in Verzapfungen 7 des restlichen Bohrwerkzeugs 1 befestigt ist, bspw. durch Reibschweissen oder hartem Löten. An den Bohrkopf 2 schliesst sich ein wendelförmig um die Drehachse A verdrillter Wendel 8 an, wobei der Querschnitt des Bohrkopfes 2 im wesentlichen stetig in den Wendel 8 übergeht. Eine Hauptschneide 9 geht in einen Hauptwendelgang 10 und eine Nebenschneide 11 in einen Nebenwendelgang 12 stetig über, welcher radial nicht an eine Hüllkurve 13 der rotierenden Hauptwendelgänge 10 heranreicht.

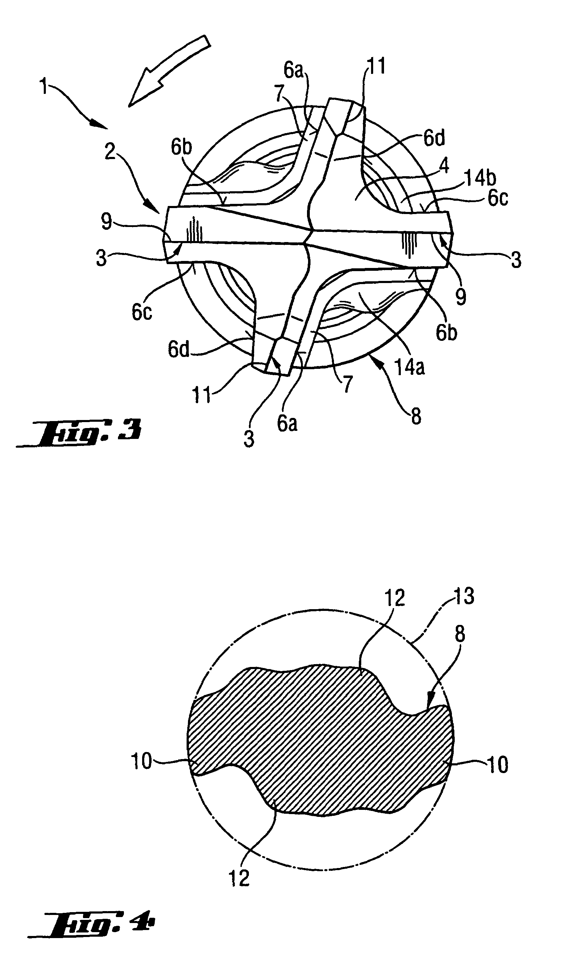

Nach Fig. 3 weist der Bohrkopf 2 den zusätzlich in der Verzapfung 7 befestigten Vollhartmetallkopf 4 auf, welcher vier zweizählig rotationssymmetrisch angeordnete Schneiden 3 und dazwischen angeordnete Ausnehmungen 14a, 14b zur Ausräumung des abrasiv abgetragenen Materials aufweist. Die Schneiden 3 sind umfänglich wechselnd als Hauptschneiden 9 und als Nebenschneiden 11 ausgebildet, wobei eine Seitenfläche 6a der Nebenschneide 11 in Drehrichtung liegend und eine Seitenfläche 6b der Hauptschneide 9 entgegen der Drehrichtung liegend benachbart angeordnet und winkelig aneinanderstossend an der innenwinkelförmigen Verzapfung 7 befestigt sind. Die diametral gegenüberliegende innenwinkelförmige Verzapfung 7 bildet jeweils eine kleine Ausnehmung 14a aus. Eine frei liegende Seitenfläche 6c der Hauptschneide 9 in Drehrichtung liegend und eine frei liegende Seitenfläche 6d der Nebenschneide 11 entgegen der Drehrichtung liegend bilden, jeweils benachbart angeordnet und winkelig aneinanderstossend, eine grosse Ausnehmung 14b aus. Die spitzwinkelig zugeordnete Nebenschneide 11 ist bezüglich der Hauptschneide 9 in Drehrichtung vorlaufend, wobei die freiliegende Seitenfläche 6d der Nebenschneide 11 lotrecht zur Hauptschneide 9 angeordnet ist.

Nach Fig. 4 weist der Querschnitt des Wendels 8 den Hauptwendelgang 10 und den Nebenwendelgang 12 auf, welcher radial nicht an die Hüllkurve 13 der rotierenden Hauptwendelgänge 10 heranreicht.

## Patentansprüche

1. Bohrwerkzeug (1) mit Schneiden (3) aus Hartmetall eines einzelnen Vollhartmetallkopfs (4), welcher an der Stirnfläche (5) des restlichen Bohrwerkzeugs (1) befestigt ist, **dadurch gekennzeichnet, dass** über eine Verzapfung (7) des restlichen Bohrwerkzeugs (1) eine zusätzliche Befestigung an einer längs der Drehachse A radial im äusseren Bereich liegenden Seitenfläche (6) der Schneiden (3) erfolgt und dass die zusätzliche Befestigung nicht an allen sondern nur an einem Teil dieser Seitenflächen (6) erfolgt, wobei diese zumindest bezüglich einiger Schneiden (3) in Drehrichtung auf Druck beansprucht sind.

2. Bohrwerkzeug nach Anspruch 1, **dadurch gekennzeichnet, dass** der jeweils andere Teil der Seitenflächen (6) einer Schneide (3) freiliegend ausgeführt ist.

3. Bohrwerkzeug nach Anspruch 2, **dadurch gekennzeichnet, dass** die freiliegende Seitenfläche (6) zumindest bezüglich einiger Schneiden (3) in Drehrichtung orientiert ist.

4. Bohrwerkzeug nach einem der vorhergehenden Ansprüche, **dadurch gekennzeichnet, dass** bei Bohrwerkzeugen (1) mit geradzahliger Anzahl von Schneiden (3), welche als Hauptschneide (9) und Nebenschneide (11) ausgebildet sind, eine Befestigung der beiden aneinanderstossenden Seitenflächen (6a; 6b) mit Druckbeanspruchung in Drehrichtung bezüglich der Hauptschneide (9) ausgebildet ist.

5. Bohrwerkzeug nach Anspruch 4, **dadurch gekennzeichnet, dass** die der Hauptschneide (9) zugeordnete in Drehrichtung vorlaufende Ausnehmung (14b) durch zwei freiliegende, aneinanderstossende, Seitenflächen (6c; 6d) ausgebildet wird und die anderen zwei aneinanderstossenden Seitenflächen (6a; 6b) an der Verzapfung (7) befestigt sind.

6. Bohrwerkzeug nach Anspruch 5 oder Anspruch 6, **dadurch gekennzeichnet**, das bei Vollhartmetallköpfen (4) mit genau vier im wesentlichen radial verlaufenden Schneiden (3) jeweils zwei diametral gegenüberliegende Innenwinkelflächen frei liegen bzw. an der Verzapfung (7) befestigt sind.

7. Bohrwerkzeug nach einem der Ansprüche 4 bis 6, **dadurch gekennzeichnet, dass** bei Bohrwerkzeugen (1) mit Hauptschneiden (9) und Nebenschneiden (11) in Drehrichtung die Nebenschneide (11) bezüglich der Hauptschneide (9) vorlaufend ist.

8. Bohrwerkzeug nach einem der Ansprüche 4 bis 7, **dadurch gekennzeichnet, dass** die freie Seitenfläche (6d) der nachlaufenden Nebenschneide (11) lotrecht zur Hauptschneide (9) angeordnet ist.

9. Bohrwerkzeug nach einem der Ansprüche 4 bis 8, **dadurch gekennzeichnet, dass** sich die Querschnittsfläche des Bohrkopfes (2) im restlichen Bohrwerkzeug (1) stetig fortsetzt und bezüglich der radial äusseren Bereiche in zugeordnete Wendelgänge (10; 12) übergeht.

10. Bohrwerkzeug nach Anspruch 9, **dadurch gekennzeichnet, dass** die Hauptschneiden (9) in die Hauptwendelgänge (10) und die Nebenschneiden (11) in die Nebenwendelgänge (12) übergehen, welche sich vom Bohrkopf (2) ausgehend im Übergangsbereich zum restlichen Bohrwerkzeug (1) stetig radial verkürzen und nicht bis an die durch die Rotation der Hauptwendelgänge (10) ausgebildete Hüllkurve (13) heranreichen.

## Claims

1. Drilling tool (1) with cutters (3) made of carbide of an individual solid carbide head (4), which is fastened to the front (5) of the rest of the drilling tool (1), **characterised in that** an additional fastening is made through a tenon joint (7) of the rest of the drilling tool (1) on a side surface (6) of the cutters (3) lying along the axis of rotation A radially in the external area and that the additional fastening is not made on all but only on part of these side surfaces (6), in which these are subject to pressure in the direction of rotation at least with reference to some cutters (3).

2. Drilling tool according to claim 1, **characterised in that** the other part of the side surfaces (6) respectively of a cutter (3) is made uncovered.

3. Drilling tool according to claim 2, **characterised in that** the uncovered side surface (6) is orientated in the direction of rotation at least with reference to some cutters (3).

4. Drilling tool according to one of the previous claims, **characterised in that** with drilling tools (1) with an even number of cutters (3), which are made as main cutters (9) and secondary cutters (11), a fastening of both side surfaces (6a; 6b) colliding with each other is made with pressure load in the direction of rotation with reference to the main cutter (9).

5. Drilling tool according to claim 4, **characterised in that** the recess (14b) running ahead in the direction of rotation allocated to the main cutter (9) is formed through two uncovered side surfaces (6c; 6d) colliding with each other and the other two side surfaces (6a; 6b) colliding with each other are fastened to the tenon joint (7).

6. Drilling tool according to claim 5 or claim 6, **characterised in that** in the case of solid carbide heads (4) with precisely four cutters (3) essentially running radially, two diametrically opposite internal angle areas are uncovered or are fastened to the tenon joint (7).

7. Drilling tool according to one of claims 4 to 6, **characterised in that** in the case of drilling tools (1) with main cutters (9) and secondary cutters (11), the secondary cutter (11) runs ahead in the direction of rotation with reference to the main cutter (9).

8. Drilling tool according to one of claims 4 to 7, **characterised in that** the free side surface (6d) of the secondary cutter (11) running after is arranged perpendicular to the main cutter (9).

9. Drilling tool according to one of claims 4 to 8, **characterised in that** the cross section area of the drilling tool head (2) continually extends in the rest of the drilling tool (1) and goes over into the allocated flutes (10; 12) with reference to the radially external areas.

10. Drilling tool according to claim 9, **characterised in that** the main cutters (9) go over into the main flutes (10) and the secondary cutters (11) go over into the secondary flutes (12), which constantly radially contract from the drilling tool head (2) extending in the transition area to the rest of the drilling tool (1) and do not reach as far as the envelope (13) formed by the rotation of the main flutes (10).

## Revendications

1. Outil de forage (1) comportant des tranchants (3) en métal dur sur une tête pleine unique en métal dur (4), laquelle est fixée sur la surface d'extrémité (5) du reste de l'outil de forage (1), **caractérisé en ce qu'**une fixation supplémentaire est obtenue par un assemblage à tenon et mortaise (7) du reste de l'outil de perçage (1) sur une surface latérale (6) des tranchants (3) située le long de l'axe de rotation A radialement dans la zone extérieure, et **en ce que** la fixation supplémentaire n'est pas effectuée en totalité mais uniquement sur une partie de ces surfaces latérales (6), lesdites surfaces étant soumises à une pression dans une direction de rotation au moins en ce qui concerne certains tranchants (3).

2. Outil de forage selon la revendication 1, **caractérisé en ce que** chacune des autres parties des surfaces latérales (6) d'un tranchant (3) est exécutée de manière exposée.

3. Outil de forage selon la revendication 2, **caractérisé en ce que** la surface latérale exposée (6) est orientée dans une direction de rotation au moins en ce qui concerne certains tranchants (3).

4. Outil de forage selon l'une quelconque des revendications précédentes, **caractérisé en ce que** lorsque des outils de forage (1) comportent un nombre pair de tranchants (3), lesquels sont configurés sous la forme d'un tranchant principal (9) et d'un tranchant auxiliaire (11), une fixation des deux surfaces latérales contiguës l'une à l'autre (6a ; 6b) est formée avec une contrainte de compression dans une direction de rotation en ce qui concerne le tranchant principal (9).

5. Outil de forage selon la revendication 4, **caractérisé en ce que** l'évidement (14b) associé qui précède le tranchant principal (9) dans la direction de rotation est formé par deux surfaces latérales (6c ; 6d) contiguës l'une à l'autre et exposées, et les deux autres surfaces latérales (6a ; 6b) contiguës l'une à l'autre sont fixées sur l'assemblage à tenon et mortaise (7).

6. Outil de forage selon la revendication 5 ou la revendication 6, **caractérisé en ce que** lorsque des têtes pleines en métal dur (4) comportent exactement quatre tranchants (3) s'étendant de manière sensiblement radiale, respectivement deux surfaces angulaires intérieures diamétralement opposées sont exposées ou sont fixées sur l'assemblage à tenon et mortaise (7).

7. Outil de forage selon l'une quelconque des revendications 4 à 6, **caractérisé en ce que** lorsque des outils de forage (1) comportent des tranchants principaux (9) et des tranchants auxiliaires (11), les tranchants auxiliaires (11) précèdent les tranchants principaux (9) dans la direction de rotation.

8. Outil de forage selon l'une quelconque des revendications 4 à 7, **caractérisé en ce que** les surfaces latérales libres (6d) des tranchants auxiliaires (11) successifs sont agencées perpendiculairement aux tranchants principaux (9).

9. Outil de forage selon l'une quelconque des revendications 4 à 8, **caractérisé en ce que** les surfaces en coupe transversale de la tête de forage (2) se poursuivent de manière continue dans le reste de l'outil de forage (1) et se confondent dans les zones radialement extérieures avec des spires hélicoïdales associées (10 ; 12).

10. Outil de perçage selon la revendication 9, **caractérisé en ce que** les tranchants principaux (9) se confondent avec les spires hélicoïdales principales (10) et les tranchants auxiliaires (11) se confondent avec les spires hélicoïdales auxiliaires (12), lesquelles diminuent radialement de manière continue en partant de la tête de forage (2) dans la zone de transition jusqu'au reste de l'outil de forage (1) et n'atteignent pas la courbe d'enveloppe (13) formée par la rotation des spires hélicoïdales principales (10).
